# EUROPEAN PATENT APPLICATION

(11) **EP 3 873 058 A1**
(43) Date of publication of application: **01.09.2021**
(21) Application number: 21159514.5
(22) Date of filing: 26.02.2021
(51) Int. Cl.: H04L 29/06, G06F 21/34, G07C 9/00

(54) **METHODS AND SYSTEMS FOR CUSTOMIZED ACTIONS FOR ACCESS CONTROL**

(30) Priority: 28.02.2020 US 202062983323 P; 05.11.2020 US 202017090188
(71) Applicant: Sensormatic Electronics, LLC, Boca Raton, FL 33487 (US)
(72) Inventor: GALLAGHER, Anne, Boca Raton, Florida 33487 (US); BOYES, Derek J., Boca Raton, Florida 33487 (US); NEILL, Terence, Boca Raton, Florida 33487 (US)
(74) Representative: Trinks, Ole

(57) **Abstract**

Aspects of the present disclosure include methods, apparatuses, and computer readable media for controlling access including receiving authentication information associated with a user, determining whether the user is authorized to access the access-controlled point based on the authentication information, retrieving, in response to determining the user is authorized to access the access-controlled point, customized action information associated with the user, transmitting, to the access-controlled point, an unlock message comprising an indicator to grant the user the access to the access-controlled point, and performing one or more customized actions based on the customized action information.

## Description

### CROSS-REFERENCE TO RELATED APPLICATIONS

The current application claims priority to United States Provisional Application No. 62/983,323, entitled "METHODS AND SYSTEMS FOR CUSTOMIZED ACTIONS FOR ACCESS CONTROL," filed on February 28, 2020, the contents of which are hereby incorporated by reference in their entireties.

### BACKGROUND

Infrastructures (e.g., buildings, plants, warehouses, laboratories), secured assets (e.g., safe-deposit boxes, fire boxes, circuit panels, etc.) and/or digital assets such as locked computers, encrypted data and/or files, etc.) may utilize one or more access-controlled points (e.g., a door that requires authentication information) to prevent unauthorized people from accessing the infrastructures, physical assets and/or digital assets. An authorized person may rely on authentication information, such as an access card, username and/or password, radio frequency identification (RFID) tags, biometric identification, or other means to enter into an access-controlled infrastructure/asset. However, different users may have different needs or preferences when accessing an access-controlled point. Therefore, improvements in access control may be desirable.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

Certain aspects of the present disclosure includes a method for receiving authentication information associated with a user, determining whether the user is authorized to access the access-controlled point based on the authentication information, retrieving, in response to determining the user is authorized to access the access-controlled point, customized action information associated with the user, transmitting, to the access-controlled point, an unlock message comprising an indicator to grant the user the access to the access-controlled point, and performing one or more customized actions based on the customized action information.

Some aspects of the present disclosure includes a memory comprising instructions and a processor communicatively coupled with the memory, the processor being configured to execute the instructions to receive authentication information associated with a user, determine whether the user is authorized to access an access-controlled point based on the authentication information, retrieve, in response to determining the user is authorized to access the access-controlled point, customized action information associated with the user, transmit, to the access-controlled point, an unlock message comprising an indicator to grant the user access to the access-controlled point, and perform one or more customized actions based on the customized action information.

An aspect of the present disclosure includes a non-transitory computer readable medium having instructions that, when executed by a processor, cause the process to receive authentication information associated with a user, determine whether the user is authorized to access an access-controlled point based on the authentication information, retrieve, in response to determining the user is authorized to access the access-controlled point, customized action information associated with the user, transmit, to the access-controlled point, an unlock message comprising an indicator to grant the user access to the access-controlled point, and perform one or more customized actions based on the customized action information.

### BRIEF DESCRIPTION OF THE DRAWINGS

The features believed to be characteristic of aspects of the disclosure are set forth in the appended claims. In the description that follows, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advantages thereof, will be best understood by reference to the following detailed description of illustrative aspects of the disclosure when read in conjunction with the accompanying drawings, wherein:
FIG. 1 illustrates an example of an environment for performing customized actions for access control in accordance with aspects of the present disclosure;
FIG. 2 a method for performing one or more customized actions by an access control system in accordance with aspects of the present disclosure;
FIG. 3 illustrates an example of a method for implementing access control and customized actions by an access control device in accordance with aspects of the present disclosure; and
FIG. 4 illustrates an example of a computer system in accordance with aspects of the present disclosure.

### DETAILED DESCRIPTION

Aspects of the present disclosure may include an access control system having an access control device controlling access to an access-controlled point. The access control system may be programmed to perform customized actions for one or more of the authorized users. In certain aspects, an authorized user having a preference and/or impairment may present provide authentication information to the access control device for authentication to access the access-controlled point. After the access control device authenticates the authorized user, the access control device may transmit an unlocking message to the access-controlled point to unlock the access-controlled point. The access control device may perform at least one customized action such as actions indicated in the user preference or actions to assist the user during the access process.

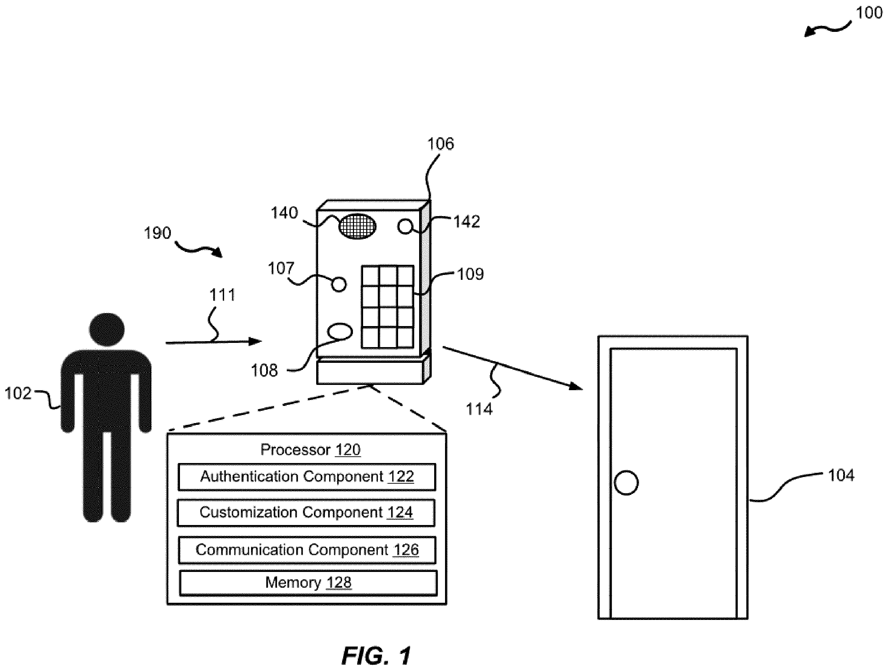

Turning now to FIG. 1, in certain non-limiting examples, an environment 100 for performing customized actions for access control may include a user 102 that may provide authentication information 111 to gain access to an access-controlled point 104. Examples of authentication information 111 may include an access card, a username and/or a password, a radio frequency identification (RFID) tag, biometric identification, or other means. The environment 100 may include an access control system 190 including the access-controlled point 104 and an access control device 106. The access control device 106 may be configured to validate the authentication information 111 provided by the user 102. The access control device 106 may grant access to the access-controlled point 104 if the user 102 is permitted to access the access-controlled point 104. The access control device 106 may transmit an unlocking message 114 to the access-controlled point 104. In one non-limiting example, the unlocking message 114 may open an electronically controlled door to a restricted area (e.g., within a building) or access to devices, such as a safe deposit box, safe, fire box, computer, etc.

In certain implementations, the access-controlled point 104 may be a door/vault that requires an access card to enter or a computer account that requires a password to use. The access-controlled point 104 may be utilized to control access to infrastructures (e.g., buildings, plants, warehouses, laboratories) and/or assets (e.g., physical assets such as safes, safe-deposit boxes, fire panels or digital assets such as encrypted files, computer accounts, computers, or digital devices). In other examples, the access-controlled point 104 may be a digital lock that restricts access to files, software, databases, information, or other digital data. Other examples of access-controlled points may be used according to aspects of the current disclosure.

In one aspect of the present disclosure, the user 102 may provide the authentication information 111 via an access card (not shown) to the access control device 106. In an example, the access control device 106 may magnetically receive the authentication information 111 from the access card.

In other aspects, the user 102 may provide the authentication information 111 using a two-factor authentication process. For example, the user 102 may provide a username and/or password to the access control device 106. The access control device 106 may transmit a confirmation message to a mobile device of the user 102 (registered previously) to confirm that the user 102 has inputted the username and/or password. Once the user 102 confirms the input, the user 102 may be authenticated for access.

In another aspect of the present disclosure, the user 102 may provide the authentication information 111 by inputting a username and/or a password into an input panel 109 (e.g., alphanumeric keypad) of the access control device 106.

In some implementations, the user 102 may provide the authentication information 111 by presenting biometric identification (e.g., face of the user 102) to a camera 107 of the access control device 106. Alternatively or additionally, the user 102 may present the voice of the user 102 to a microphone 108 of the access control device 106. In some instances, the user 102 may provide the authentication information 111 by providing one or more fingerprints to the camera 107 (or other types of fingerprint readers). In an example, the user 102 may provide the authentication information 111 by providing one or more iris patterns to the camera 107 (or other types of iris pattern readers). Other methods of providing the authentication information 111 may also be utilized.

In some instances, the access control device 106 may include a speaker 140 that provides audio output to the user 102. The access control device 106 may include a light 142 that provides visual output to the user 102. In alternative implementations, the speaker 140 and/or the light 142 may be stand-alone devices or part of the access-controlled point 104.

In some aspects of the present disclosure, the access control device 106 may include a processor 120 and a memory 128. The processor 120 may include an authentication component 122 configured to verify authentication information. The authentication component 122 may be implemented as a hardware circuit configured to verify authentication information or by the processor 120 executing instructions stored in the memory 128. The processor 120 may include a customization component 124 configured to identify customized actions associated with the user 102. The customization component 124 may be implemented as a hardware circuit or by the processor 120 executing instructions stored in the memory 128. The processor 120 may include a communication component 126 that receives and/or transmits information and/or data. The communication component 126 may be implemented as a hardware circuit configured to perform communication functions or by the processor 120 executing instructions stored in the memory 128. The memory 128 may store instructions executable by the processor 120 to implement various components and subcomponents of the access control device 106.

In some aspects of the present disclosure, the access-controlled point 104 may an electronically controlled door. The access-controlled point 104 may be configured to receive the unlocking message 114 from, for example, the access control device 106. In response to receiving the unlocking message 114, the access-controlled point 104 may grant access to the user 102 by releasing an electronic lock.

In some implementations, the environment 100 may include an optional server that stores authorization information associated with users. In optional implementations, the optional server may be configured to verify the authorization information.

During operations, the user 102 may provide customized action information associated with the user 102 during an enrollment process. The user 102 may provide the customized action information to the access control device 106 and/or an external storage, such as the optional server, a cloud storage, or other storage devices. The customized action information may include preferences (e.g., audio notification instead of visual notification, visual notification instead of audio notification, customized visual or audio indications dependent on the event, customized light sequences, customized audio announcements or clip) and/or impairment information (e.g., color blindness, visual impairment, hearing impairment, physical/mobility impairment, etc.).

During operations, the user 102 may provide authentication information 111 (e.g., access card, biometric identifier, username/password, personal identification number (PIN), etc.) to the access control device 106. The authentication component 122 may determine that the user 102 is authorized to access the access-controlled point 104 (e.g., physical assets such as safety deposit boxes, safes, fire panels, alarm panels or digital assets such as locked computers, encrypted data and/or files, etc.). The communication component 126 may transmit, in response to the authentication component 122 determining that the user 102 is authorized to access the access-controlled point 104, the unlocking message 114 to the access-controlled point 104. The unlocking message 114 may include an indicator to the access-controlled point 104 to unlock the access-controlled point 104.

During operations, the customization component 124, in response to the authentication component 122 determining that the user 102 is authorized to access the access-controlled point 104, may retrieve customized action information (e.g., disabilities information and/or preferences previously provided by the user 102) associated with the user 102. The customization component 124 may perform at least one customized action such as actions indicated in the user preference (e.g., audio notification instead of visual notification, visual notification instead of audio notification, customized visual or audio indications dependent on the event, customized light sequences, customized audio announcements or clip) or actions to assist the user during the access process (e.g., dynamic patterns of the light 142 to indicate to a visually impaired user that access is granted, customized light patterns or customized light colors to indicate to a colorblind user that access is granted, extending the unlocking time of a door to allow physical impaired more time to pass through the unlocked door etc.).

Examples of the customized visual or audio indications dependent on the event may include a customized visual indication by the display (not shown) of the access control device 106 showing a headline news segment of the day. Another example may include the microphone 140 broadcasting a reminder of a meeting the user 102 is to attend.

Examples of the customized light sequences may include the light 142 showing a particular color sequence, blinking rate, blinking duration, light intensity changes, etc.

Examples of the customized audio announcements or clip may include the microphone 140 broadcasting a customized audio clip (e.g., a portion of a theme song from a movie, a portion of a popular song, etc.).

Examples of the dynamic patterns, customized light patterns, or customized light colors may include the light 142 showing a particular color sequence, blinking rate, blinking duration, light intensity changes, etc.

In a first example, a visually impaired user may attempt to access an access-controlled point using an access card. For instance, the user 102 may provide the authentication information 111 via an access card (not shown) to the access control device 106. The access control device 106 may electrically or magnetically receive an alphanumeric string associated with the access card. The access control device 106 may include an internal RFID reader or an inductive reader that receives the electro-magnetic signals generated from the access card. The electro-magnetic signals may include the alphanumeric string. The authentication component 122 of the access control device 106 may compare the received alphanumeric string to a list of strings associated a number of authorized access cards. The list of strings may be stored in the memory 128, external storages, cloud storages, and/or the optional server. If the received alphanumeric string is identical to one of the strings in the list of strings, then the authentication component 122 may determine that the user 102 (who carries the access card) is authorized to access the access-controlled point 104. The customization component 124, in response to the authentication component 122 determining that the user 102 is authorized to access the access-controlled point 104, may retrieve customized action information (e.g., the user 102 is visually impaired) associated with the user 102. The customization component 124 may determine that the user 102 is visually impaired based on the customized action information. The communication component 126 may transmit the unlocking message 114 to the access-controlled point 104. The unlocking message 114 may include an indicator to the access-controlled point 104 to unlock. The speaker 140 may provide the audio notification of the sound indicating that the access-controlled point 104 is unlocked to the user 102 due to the visual impairment of the user 102.

In a second example, a hearing impaired user may attempt to access an access-controlled point using a username and/or a password. For instance, the user 102 may provide the authentication information 111 by inputting a username and/or a password of the user 102 into the input panel 109 (e.g., alphanumeric keypad) of the access control device 106. The authentication component 122 of the access control device 106 may compare the received username and/or password to a list of usernames and/or passwords associated a number of authorized users. The list of usernames and/or passwords may be stored in the memory 128, external storages, cloud storages, and/or the optional server. If the received username and/or password is identical to one of the usernames and/or passwords in the list of usernames and/or passwords, then the authentication component 122 may determine that the user 102 (who input the username and/or password) is authorized to access the access-controlled point 104. The customization component 124, in response to the authentication component 122 determining that the user 102 is authorized to access the access-controlled point 104, may retrieve customized action information (e.g., the user 102 is hearing impaired) associated with the user 102. The customization component 124 may determine that the user 102 is hearing impaired based on the customized action information. The communication component 126 may transmit the unlocking message 114 to the access-controlled point 104. The unlocking message 114 may include an indicator to the access-controlled point 104 to unlock. After receiving the unlocking message 114, the access-controlled point 104 may unlock. The light 142 may provide the visual notification to the user 102 by changing the color of the light 142 from red to green due to the hearing impairment of the user 102.

In a third example, a user with a preference for a customized audio message may attempt to access an access-controlled point using facial recognition. For instance, the user 102 may provide the authentication information 111 by presenting the face of the user 102 to the camera 107 of the access control device 106. The authentication component 122 of the access control device 106 may compare a biometric template associated with the face of the user 102 to a list of biometric templates associated a number of authorized users. The list of biometric templates may be stored in the memory 128, external storages, cloud storages, and/or the optional server. If the biometric template is sufficiently similar (e.g., similarity above a threshold) to one of the biometric templates in the list of biometric templates, then the authentication component 122 may determine that the user 102 (who provided the face for authentication) is authorized to access the access-controlled point 104. The customization component 124, in response to the authentication component 122 determining that the user 102 is authorized to access the access-controlled point 104, may retrieve customized action information (e.g., preferences previously provided by the user 102) associated with the user 102. The customization component 124 may determine that the user 102 requested a customized audio message (e.g., "good morning") in the customized action information. The communication component 126 may transmit the unlocking message 114 to the access-controlled point 104. The unlocking message 114 may include an indicator to the access-controlled point 104 to unlock. After receiving the unlocking message 114, the access-controlled point 104 may unlock. The speaker 140 may provide the message "good morning" to the user 102 due to the preference by the user 102 of providing the audio message "good morning" upon accessing the access-controlled point 104.

In a fourth example, a user with a preference for dynamic information (explained below) may attempt to access an access-controlled point using voice recognition. For instance, the user 102 may provide the authentication information 111 by presenting the voice of the user 102 to the microphone 108 of the access control device 106. The authentication component 122 of the access control device 106 may compare a biometric template associated with the voice of the user 102 to a list of biometric templates associated a number of authorized users. The list of biometric templates may be stored in the memory 128, external storages, cloud storages, and/or the optional server. If the biometric template is sufficiently similar (e.g., similarity above a threshold) to one of the biometric templates in the list of biometric templates, then the authentication component 122 may determine that the user 102 (who provided the voice for authentication) is authorized to access the access-controlled point 104. The customization component 124, in response to the authentication component 122 determining that the user 102 is authorized to access the access-controlled point 104, may retrieve customized action information (e.g., preferences previously provided by the user 102) associated with the user 102. The customization component 124 may determine that the user 102 requested the presentation of dynamic information (e.g., current weather at the location of the access-controlled point 104, latest score of a sports game associated with a team selected by the user 102, value of a stock selected by the user 102, etc.). The customization component 124 may retrieve the dynamic information (e.g., current weather). The communication component 126 may transmit the unlocking message 114 to the access-controlled point 104. The unlocking message 114 may include an indicator to the access-controlled point 104 to unlock. After receiving the unlocking message 114, the access-controlled point 104 may unlock. The dynamic information may be provided aurally (e.g., "current temperature is 80 degrees Fahrenheit) via the speaker 140 and/or visually (e.g., "80°F") via a display (not shown) associated with the access-controlled point 104. The dynamic information may include information that may change over time (e.g., every second, minute, hour, day, week, month, or year). Examples of dynamic information may include stock values, sports game scores, weather, time of day, date/day of month, breaking news, etc.

In a fifth example, a physically impaired user may attempt to access an access-controlled point using a personal identification number. For instance, the user 102 may provide the authentication information 111 by inputting a personal identification number (PIN) into the input panel 109 (e.g., alphanumeric keypad) of the access control device 106. The authentication component 122 of the access control device 106 may compare the received PIN to a list of PINs associated a number of authorized users. The list of PINs may be stored in the memory 128, external storages, cloud storages, and/or the optional server. If the received PIN is identical to one of the PINs in the list of PINs, then the authentication component 122 may determine that the user 102 (who input the PIN) is authorized to access the access-controlled point 104. The customization component 124, in response to the authentication component 122 determining that the user 102 is authorized to access the access-controlled point 104, may retrieve customized action information (e.g., the user 102 is physically impaired) associated with the user 102. The customization component 124 may determine that the user 102 is physically impaired. The communication component 126 may transmit the unlocking message 114 to the access-controlled point 104. The unlocking message 114 may include a first indicator to the access-controlled point 104 to unlock. After receiving the unlocking message 114, the access-controlled point 104 may unlock. The access-controlled point 104 may be unlocked for 20 seconds to give the user 102 more time (e.g., 20 seconds for users with physically impairment rather than 5 seconds for other users or an extension of time by 15 seconds) to access. Other authorized users without physical impairment may have less time (e.g., 5 seconds) to minimize the opportunity of an unauthorized intruder "piggy-backing" other authorized users to gain access to the access-controlled point 104.

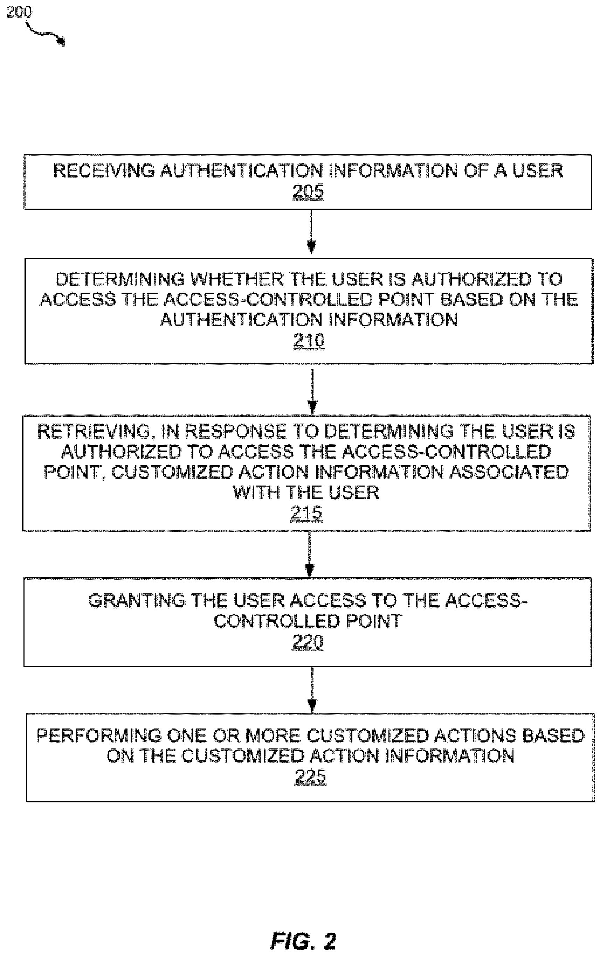

Turning to FIG. 2, an example of a method 200 for performing one or more customized actions by an access control system may be performed by the camera 107, the microphone 108, the input panel 109, the processor 120, the authentication component 122, the customization component 124, the communication component 126, the memory 128, the access control device 106, the speaker 140, and/or the light 142.

At block 205, the method 200 may receive authentication information of a user. For example, the access control device 106 may receive a PIN input by the user 102 via the input panel 109 as the authentication information 111. Alternatively or additionally, the access control device 106 may receive biometric information, such as voice, provided by the user 102 via the microphone 108 as the authentication information 111. Other methods of receiving authentication information, such as those described with respect to Fig. 1, may also be used by the access control device 106 to receive authentication information. The camera 107, the microphone 108, the input panel 109, and/or the processor 120 of the access control device 106 may be configured to or may provide means for receiving authentication information of a user.

At block 210, the method 200 may determine whether the user is authorized to access the access-controlled point based on the authentication information. For example, the authentication component 122 of the access control device 106 may compare the received PIN to a list of PINs associated a number of authorized users. The list of PINs may be stored in the memory 128, external storages, cloud storages, and/or the optional server. If the received PIN is identical to one of the PINs in the list of PINs, then the authentication component 122 may determine that the user 102 (who input the PIN) is authorized to access the access-controlled point 104. The processor 120 and/or the authentication component 122 of the access control device 106 may be configured to or may provide means for determining whether the user is authorized to access the access-controlled point based on the authentication information.

At block 215, the method 200 may retrieve, in response to determining the user is authorized to access the access-controlled point, customized action information associated with the user. For example, the customization component 124 of the access control device 106 may retrieve customized action information associated with the user 102, such as disability information (e.g., the user 102 is physically impaired) and/or preferences. The processor 120 and/or the customization component 124 of the access control device 106 may be configured to or may provide means for retrieving, in response to determining the user is authorized to access the access-controlled point, customized action information associated with the user.

At block 220, the method 200 may grant the user access to the access-controlled point. For example, the processor 150 may unlock the access-controlled point 104. The processor 150 may be configured to or may provide means for granting the user access to the access-controlled point.

At block 225, the method 200 may perform one or more customized actions based on the customized action information. For example, the processor 150 and/or the access-controlled point 104 may leave the access-controlled point 104 unlocked for a longer time (e.g., 20 seconds for users with physically impairment rather than 5 seconds for other users). The access-controlled point 104 may be unlocked for 20 seconds to give the user 102 more time (e.g., 15 seconds more) to access. The processor 150 and/or the access-controlled point 104 may be configured to or may provide means for performing one or more customized actions based on the customized action information.

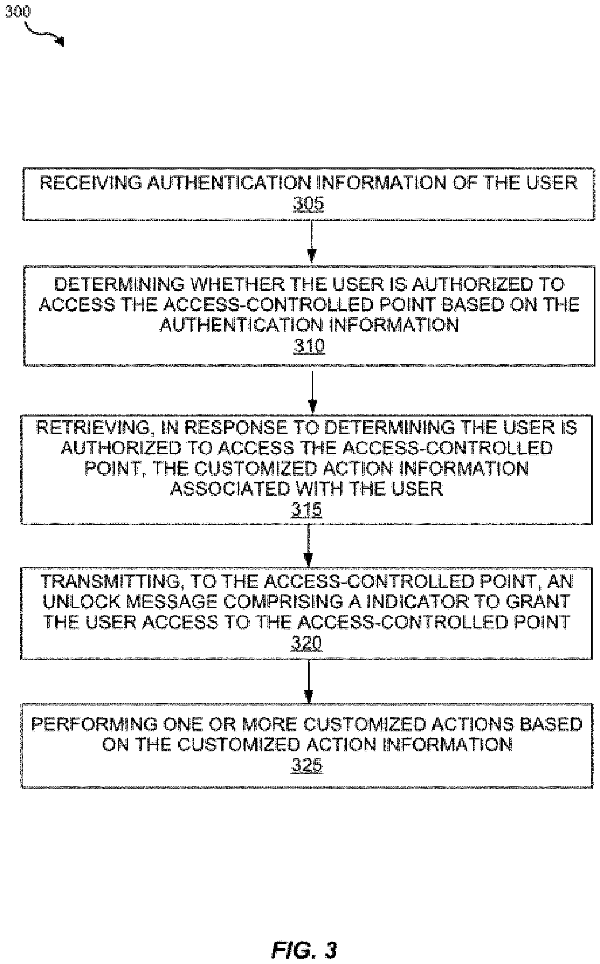

Turning to FIG. 3, an example of a method 300 for implementing access control and customized actions by an access control device may be performed by the camera 107, the microphone 108, the input panel 109, the processor 120, the authentication component 122, the customization component 124, the communication component 126, the memory 128, the access control device 106, the speaker 140, and/or the light 142.

At block 305, the method 300 may receive authentication information of a user. For example, the access control device 106 may receive a PIN input by the user 102 via the input panel 109 as the authentication information 111. Alternatively or additionally, the access control device 106 may receive biometric information, such as voice, provided by the user 102 via the microphone 108 as the authentication information 111. Other methods of receiving authentication information, such as those described with respect to Fig. 1, may also be used by the access control device 106 to receive authentication information. The camera 107, the microphone 108, the input panel 109, and/or the processor 120 of the access control device 106 may be configured to or may provide means for receiving authentication information of a user.

At block 310, the method 300 may determine whether the user is authorized to access the access-controlled point based on the authentication information. For example, the authentication component 122 of the access control device 106 may compare the received PIN to a list of PINs associated a number of authorized users. The list of PINs may be stored in the memory 128, external storages, cloud storages, and/or the optional server. If the received PIN is identical to one of the PINs in the list of PINs, then the authentication component 122 may determine that the user 102 (who input the PIN) is authorized to access the access-controlled point 104. The processor 120 and/or the authentication component 122 of the access control device 106 may be configured to or may provide means for determining whether the user is authorized to access the access-controlled point based on the authentication information.

At block 315, the method 300 may retrieve, in response to determining the user is authorized to access the access-controlled point, customized action information associated with the user. For example, the customization component 124 of the access control device 106 may retrieve customized action information associated with the user 102, such as disability information (e.g., the user 102 is physically impaired) and/or preferences. The processor 120 and/or the customization component 124 of the access control device 106 may be configured to or may provide means for retrieving, in response to determining the user is authorized to access the access-controlled point, customized action information associated with the user.

At block 320, the method 300 may transmit, to the access-controlled point, an unlock message comprising an indicator to grant the user access to the access-controlled point. For example, the communication component 126 of the access control device 106 may transmit, to the access-controlled point 104, the unlocking message 114 including an indicator to unlock the access-controlled point 104. The processor 120 and/or the communication component 126 of the access control device 106 may be configured to or may provide means for transmitting, to the access-controlled point, an unlock message comprising a first indicator to grant the user access to the access-controlled point and a second indictor to perform one or more customized actions based on the customized action information.

At block 325, the method 300 may perform one or more customized actions based on the customized action information. For example, the communication component 126 of the access control device 106 may transmit may indicate to the access-controlled point 104 (via a second indictor or transmitting more than one unlocking message 114) to leave the access-controlled point 104 unlocked for a longer time (e.g., 20 seconds for users with physically impairment rather than 5 seconds for other users). The access-controlled point 104 may be unlocked for 20 seconds to give the user 102 more time (e.g., 15 seconds more) to access. The access control device 106 may be configured to or may provide means for performing one or more customized actions based on the customized action information.

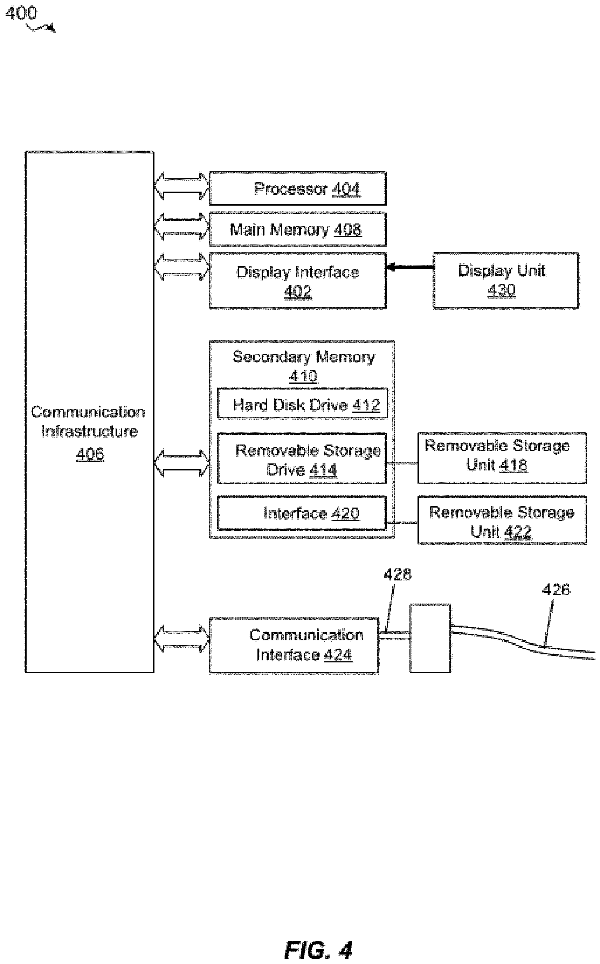

Aspects of the present disclosures, such as the access control device 106 and/or the access-controlled point 104 may be implemented using hardware, software, or a combination thereof and may be implemented in one or more computer systems or other processing systems. In an aspect of the present disclosures, features are directed toward one or more computer systems capable of carrying out the functionality described herein. An example of such a computer system 400 is shown in FIG. 4. The access control device 106 and/or the access-controlled point 104 may include some or all of the components of the computer system 400.

The computer system 400 includes one or more processors, such as processor 404. The processor 404 is connected with a communication infrastructure 406 (e.g., a communications bus, cross-over bar, or network). The term "bus," as used herein, can refer to an interconnected architecture that is operably connected to transfer data between computer components within a singular or multiple systems. The bus can be a memory bus, a memory controller, a peripheral bus, an external bus, a crossbar switch, and/or a local bus, among others. Various software aspects are described in terms of this example computer system. After reading this description, it will become apparent to a person skilled in the relevant art(s) how to implement aspects of the disclosures using other computer systems and/or architectures.

The computer system 400 may include a display interface 402 that forwards graphics, text, and other data from the communication infrastructure 406 (or from a frame buffer not shown) for display on a display unit 430. Computer system 400 also includes a main memory 408, preferably random access memory (RAM), and may also include a secondary memory 410. The secondary memory 410 may include, for example, a hard disk drive 412, and/or a removable storage drive 414, representing a floppy disk drive, a magnetic tape drive, an optical disk drive, a universal serial bus (USB) flash drive, etc. The removable storage drive 414 reads from and/or writes to a removable storage unit 418 in a well-known manner. Removable storage unit 418 represents a floppy disk, magnetic tape, optical disk, USB flash drive etc., which is read by and written to removable storage drive 414. As will be appreciated, the removable storage unit 418 includes a computer usable storage medium having stored therein computer software and/or data. In some examples, one or more of the main memory 408, the secondary memory 410, the removable storage unit 418, and/or the removable storage unit 422 may be a non-transitory memory.

Alternative aspects of the present disclosures may include secondary memory 410 and may include other similar devices for allowing computer programs or other instructions to be loaded into computer system 400. Such devices may include, for example, a removable storage unit 422 and an interface 420. Examples of such may include a program cartridge and cartridge interface (such as that found in video game devices), a removable memory chip (such as an erasable programmable read only memory (EPROM), or programmable read only memory (PROM)) and associated socket, and other removable storage units 422 and interfaces 420, which allow software and data to be transferred from the removable storage unit 422 to computer system 400.

Computer system 400 may also include a communications interface 424. Communications interface 424 allows software and data to be transferred between computer system 400 and external devices. Examples of communications interface 424 may include a modem, a network interface (such as an Ethernet card), a communications port, a Personal Computer Memory Card International Association (PCMCIA) slot and card, etc. Software and data transferred via communications interface 424 are in the form of signals 428, which may be electronic, electromagnetic, optical or other signals capable of being received by communications interface 424. These signals 428 are provided to communications interface 424 via a communications path (e.g., channel) 426. This path 426 carries signals 428 and may be implemented using wire or cable, fiber optics, a telephone line, a cellular link, an RF link and/or other communications channels.

In this document, the terms "computer program medium" and "computer usable medium" are used to refer generally to media such as a removable storage unit 418, a hard disk installed in hard disk drive 412, and signals 428. These computer program products provide software to the computer system 400. Aspects of the present disclosures are directed to such computer program products.

Computer programs (also referred to as computer control logic) are stored in main memory 408 and/or secondary memory 410. Computer programs may also be received via communications interface 424. Such computer programs, when executed, enable the computer system 400 to perform the features in accordance with aspects of the present disclosures, as discussed herein. In particular, the computer programs, when executed, enable the processor 404 to perform the features in accordance with aspects of the present disclosures. Accordingly, such computer programs represent controllers of the computer system 400.

In an aspect of the present disclosures where the method is implemented using software, the software may be stored in a computer program product and loaded into computer system 400 using removable storage drive 414, hard drive 412, or communications interface 420. The control logic (software), when executed by the processor 404, causes the processor 404 to perform the functions described herein. In another aspect of the present disclosures, the system is implemented primarily in hardware using, for example, hardware components, such as application specific integrated circuits (ASICs). Implementation of the hardware state machine so as to perform the functions described herein will be apparent to persons skilled in the relevant art(s).

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

The detailed description set forth above in connection with the appended drawings describes example embodiments and does not represent all the embodiments that may be implemented or that are within the scope of the claims. The term "exemplary," as used in this description, means "serving as an example, instance, or illustration," and not "preferred" or "advantageous over other embodiments." The detailed description includes specific details for the purpose of providing an understanding of the described techniques. These techniques, however, may be practiced without these specific details. In some instances, well-known structures and devices are shown in block diagram form in order to avoid obscuring the concepts of the described embodiments.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above may be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or "as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media may comprise RAM, ROM, electrically erasable programmable read only memory (EEPROM), compact disk (CD) ROM or other optical disk storage, magnetic disk storage or other magnetic storage devices, or any other medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not to be limited to the examples and designs described herein but is to be accorded the broadest scope consistent with the principles and novel features disclosed herein.

## Claims

1. A method (200, 300) of controlling access to an access-controlled point (104), comprising:
- receiving authentication information (111) associated with a user (102);
- determining whether the user (102) is authorized to access the access-controlled point (104) based on the authentication information (111);
- retrieving, in response to determining the user (102) is authorized to access the access-controlled point (104), customized action information associated with the user (102);
- transmitting, to the access-controlled point (104), an unlock message comprising an indicator to grant the user (102) the access to the access-controlled point (104); and
- performing one or more customized actions based on the customized action information.

2. The method (200, 300) of claim 1,
wherein receiving authentication information (111) comprises receiving at least one of biometric information, a personal identification number, a username, a password, or a signal from an access card,
wherein the biometric information preferably comprises one or more of fingerprint information, facial information, iris information, or voice information.

3. The method (200, 300) of claim 1 or 2,
wherein the customized action information comprises at least one of disability information or preferences.

4. The method (200, 300) of one of claims 1 to 3,
wherein the one or more customized actions comprises at least one of an audio customization, a visual customization, an extension of time to the access of the access-controlled point (104), or dynamic information.

5. The method (200, 300) of claim 4,
wherein the audio customization comprises at least one of an audio message or an audio indication, and/or
wherein the visual customization comprises at least one of a light color, a light pattern, a visual message, or a visual indication.

6. An access control device (106), comprising:
- a memory (128, 408, 410) comprising instructions; and
- a processor (120, 404) communicatively coupled with the memory (128, 408, 410), the processor (120, 404) being configured to execute the instructions to:
- receive authentication information (111) associated with a user (102);
- determine whether the user (102) is authorized to access an access-controlled point (104) based on the authentication information (111);
- retrieve, in response to determining the user (102) is authorized to access the access-controlled point (104), customized action information associated with the user (102);
- transmit, to the access-controlled point (104), an unlock message comprising an indicator to grant the user (102) access to the access-controlled point (104); and
- perform one or more customized actions based on the customized action information.

7. The access control device (106) of claim 6,
wherein receiving authentication information (111) comprises receiving at least one of biometric information, a personal identification number, a username, a password, or a signal from an access card,
wherein the biometric information preferably comprises one or more of fingerprint information, facial information, iris information, or voice information.

8. The access control device (106) of claim 6 or 7,
wherein the customized action information comprises at least one of disability information or preferences.

9. The access control device (106) of one of claims 6 to 8,
wherein the one or more customized actions comprises at least one of an audio customization, a visual customization, an extension of time to the access of the access-controlled point (104), or dynamic information.

10. The access control device (106) of claim 9,
wherein the audio customization comprises at least one of an audio message or an audio indication.

11. The access control device (106) of claim 9 or 10,
wherein the visual customization comprises at least one of a light color, a light pattern, a visual message, or a visual indication.

12. A non-transitory computer readable medium comprising instructions that, when executed by a processor (120, 404), cause the processor (120, 404) to:
- receive authentication information (111) associated with a user (102);
- determine whether the user (102) is authorized to access an access-controlled point (104) based on the authentication information (111);
- retrieve, in response to determining the user (102) is authorized to access the access-controlled point (104), customized action information associated with the user (102);
- transmit, to the access-controlled point (104), an unlock message comprising a first indicator to grant the user (102) access to the access-controlled point (104); and
- perform one or more customized actions based on the customized action information.

13. The non-transitory computer readable medium of claim 12,
wherein the instructions for receiving authentication information (111) comprises instructions that, when executed by the processor (120, 404), cause the processor (120, 404) to receive at least one of biometric information, a personal identification number, a username, a password, or a signal from an access card,
wherein the biometric information preferably comprises one or more of fingerprint information, facial information, iris information, or voice information.

14. The non-transitory computer readable medium of claim 12 or 13,
wherein the customized action information comprises at least one of disability information or preferences.

15. The non-transitory computer readable medium of one of claims 12 to 14,
wherein the one or more customized actions comprises at least one of an audio message, an audio indication, a light color, a light pattern, a visual message, a visual indication, an extension of time to the access of the access-controlled point (104), or dynamic information.
